# EUROPÄISCHE PATENTSCHRIFT

(11) **EP 0 818 150 B1**
(45) Veröffentlichungstag und Bekanntmachung des Hinweises auf die Patenterteilung: **13.06.2001**
(21) Anmeldenummer: 97111613.2
(22) Anmeldetag: 09.07.1997
(51) Int. Cl.: A23G 1/18, A23G 1/10, A23G 3/02, A23G 3/00, A23G 1/00

(54) **Verfahren und Vorrichtung zum kontinuierlichen Aufbereiten von zu verarbeitenden fetthaltigen Massen**
Process and apparatus for continuous treatment of processed fatty masses
Procédé et appareil de traitement continu pour la mise en oeuvre de masses grasses

(30) Priorität: 12.07.1996 DE 19628104
(43) Veröffentlichungstag der Anmeldung: 14.01.1998
(73) Patentinhaber: Sollich KG, 32105 Bad Salzuflen (DE)
(72) Erfinder: Sollich, Helmut, 24407 Rabenkirchen (DE)
(74) Vertreter: Patentanwälte Rehberg + Hüppe

(56) Entgegenhaltungen:
- EP-A- 0 289 849
- WO-A-92/00015

## Beschreibung

Die Erfindung betrifft ein Verfahren zum kontinuierlichen Aufbereiten von zu verarbeitenden fetthaltigen Massen in einer Temperiermaschine mit mehreren Kühletagen mit Kühlflächen und nachgeschalteten Temperieretagen mit Temperierflächen, wobei die Masse vermittels einer Pumpe nacheinander durch Massekammern der Kühletagen und der Temperieretagen geführt und dabei in den Massekammern unter Anwendung angetriebener Rührwerkzeuge gerührt wird, während Kühlkammern an den Kühlflächen von einem Kühlmedium und Temperierkammern an den Temperierflächen von einem Temperiermedium durchströmt werden, wobei in die Masse während ihres Durchflusses durch die Massekammern der Temperiermaschine ein Gas eingebracht wird. Die Temperieretage kann als Kühl- oder als Wärmeetage ausgebildet sein bzw. betrieben werden. Es wird weiter eine Vorrichtung zur Durchführung des Verfahrens aufgezeigt.

Ein Verfahren und eine Vorrichtung der eingangs beschriebenen Art sind zur Aufbereitung einer Fettcreme bekannt, wie sie bei der Herstellung von Waffeln als belüftete Füllmasse eingesetzt wird. Es ist eine Leitung mit einem Verteilerkopf vorgesehen, die in einer Massekammer endet und mit deren Hilfe in die Masse während ihres Durchflusses durch die Massekammern der Temperiermaschine ein Gas eingebracht wird. Das Gas wurde gegen den für eine Temperiermaschine normalen inneren Gegendruck von ca. 1,0 bis 1,5 bar von außen direkt in eine der Massekammern eingebracht. In den Massekammern waren angetriebene Rührwerkzeuge vorgesehen, mit denen die Masse in den Massekammern gerührt und dabei durchmischt wurde. Dabei wurde auch das Gas mit diesen Rührwerkzeugen in den Massekammern nach der Einbringungsstelle in der Masse verteilt. Es entstanden zu große, ungleichmäßig verteilte Gasblasen in der Masse. Die Gaseinbringung war nur bei sehr viskosen Massen, beispielsweise der Fettcreme, möglich. Ein Teil des Gases entwich bei späteren Weiterverarbeitungsschritten der belüfteten Masse bei Einwirken von Atmosphärendruck. Für kakaobutterhaltige Massen und Fettmassen mit ähnlicher Viskosität konnte die bekannte Vorrichtung nicht eingesetzt werden.

Ein weiteres Verfahren und eine Vorrichtung, jedoch zur Behandlung von kakaobutterhaltiger Fettmasse, sind aus der EP 0 289 849 A2 bekannt. In einer Temperiermaschine wird die aufzubereitende Masse zunächst durch Kühletagen mit Kühlflächen geführt, um die flüssige Masse so abzukühlen, daß sich ein möglichst hoher Anteil von Kristallen in stabiler Form in der Masse bildet. Nachfolgend wird die Masse durch Wärmeetagen mit Wärmeflächen geführt, um instabile Kristalle wieder aufzuschmelzen bzw. die Masse in eine für die Verarbeitung günstige Temperatur anzuheben. In den Massekammern finden angetriebene Rührwerkzeuge Anwendung, mit deren Hilfe die Masse in den Massekammern intensiv durchmischt und von den Kühl- bzw. Wärmeflächen berührungslos abgenommen wird. Die Rührwerkzeuge in den Massekammern der Kühletagen und die Rührwerkzeuge in den Massekammern der wärmeetagen sind identisch ausgebildet und werden in der Regel mit übereinstimmender Drehzahl von einem einzigen zugeordneten Antrieb angetrieben.

Aus der WO 92/00015 ist eine Temperiermaschine bekannt, die ebenfalls eine Kühletage oder Kühlzone aufweist, an die sich eine Wärmeetage oder Wärmezone anschließt. Die Masse wird auch hier vermittels einer Pumpe durch die Massekammern geleitet, wobei zunächst eine Kühlung und dann eine Erwärmung der Masse eintritt, bis der verarbeitungsfähige Zustand erreicht ist. Auch hierbei werden in den Massekammern Rührwerkzeuge eingesetzt. Die in den Massekammern der Kühletagen bzw. der Kühlzone eingesetzten Rührwerkzeuge sind jedoch konstruktiv etwas abweichend von den Rührwerkzeugen ausgebildet, die in den Massekammern der Wärmezone oder der Wärmeetagen Anwendung finden. Beide Arten von Rührwerkzeugen zielen darauf ab, lediglich eine hinreichende Durchmischung der Masse zu erreichen. Die Rührwerkzeuge in der Kühlzone werden durch einen ersten Antrieb und die Rührwerkzeuge in der Wärmezone durch einen zweiten Antrieb angetrieben, so daß insoweit auch unterschiedliche Drehzahlen Anwendung finden können. Auch hierbei entsteht letztendlich die temperierte Masse in verarbeitungsfähigem Zustand. Solche Massen haben ein spezifisches Gewicht von etwa 1,2 g/cm³.

Andererseits ist die Belüftung und Aufbereitung von kakaobutterhaltigen und anderen fetthaltigen Massen bekannt. Es kann sich hier um Schokoladeersatzmassen ohne Kakaobutter handeln, wie auch um Fettmassen, wie sie als Füllung von Pralinen, Gebäck oder Waffeln eingesetzt werden. Dabei wird die Masse zunächst in einer Temperiermaschine temperiert. Mit dem Ausgang der Temperiermaschine ist eine Leitung verbunden, die zu einer gesonderten Auf schlagmaschine führt, in der dann nachträglich Gas eingeführt und die Masse mit dem Gas aufgeschlagen wird. Als Gas wird dabei insbesondere Stickstoff oder Luft in die Masse eingearbeitet. Durch dieses vom Temperieren getrennte Aufschlagen wird der Temperiergrad der vorher temperierten Masse oft verändert, weil durch den Aufschlagprozeß eine erhebliche Menge kinetischer Energie in die Masse eingeführt wird, die sich zumindest teilweise in einer oft nachteiligen Erwärmung der Masse äußert.

Der Erfindung liegt die Aufgabe zugrunde, ein Verfahren der eingangs beschriebenen Art und eine zu ihrer Durchführung geeignete Vorrichtung aufzuzeigen, mit denen es möglich ist, auch eine belüftete kakaobutterhaltige oder andere fetthaltige Masse mit vergleichsweise niedrigerem spezifischen Gewicht und in guter Anpassung an den jeweils gewünschten Temperiergrad kontinuierlich herzustellen.

Erfindungsgemäß wird dies bei dem Verfahren der eingangs beschriebenen Art dadurch erreicht, daß die Masse mit dem Gas in einer in die Temperiermaschine integrierten Aufschlagstufe mit gesonderten Aufschlagelementen unter Einwirkung eines erhöhten Gegendrucks der Masse aufgeschlagen und somit das Gas in der Masse homogen und feinblasig verteilt wird.

Die Erfindung geht von dem Gedanken aus, das Gas nicht nur an irgendeiner Stelle in die Masse einzuleiten, sondern die Masse mit dem eingebrachten Gas in einer gesonderten integrierten Aufschlagstufe mit besonders ausgebildeten Aufschlagelementen aufzuschlagen und dabei gleichmäßig und fein in der Masse zu verteilen. Das Aufschlagen erfolgt konzentriert in der Aufschlagstufe und unter Einwirkung eines erhöhten Gegendrucks der Masse. Dies wird zu einem Zeitpunkt während der Durchführung der Masse durch die Temperiermaschine durchgeführt, der vor der Erreichung des gewünschten verarbeitungsfähigen Temperiergrades liegt. Damit besteht die Möglichkeit, die Einarbeitung des Gases und den Temperiergrad so aufeinander abzustimmen, daß sich unerwünschte Abweichungen vermeiden und optimale Verarbeitungsbedingungen einhalten lassen. Solche Massen mit verringertem spezifischen Gewicht, die auch als belüftete Massen bezeichnet werden, und zwar auch dann, wenn als Gas Stickstoff eingearbeitet wird, erbringen nicht nur den gewichtsmäßigen Vorteil, was sich kostensparend auf die Herstellung der zu erzeugenden Waren auswirkt. In vielen Fällen werden zusätzlich die Verzehreigenschaften der Ware verbessert. Auch die Bestrebungen, den Fetteinsatz bei Nahrungsmitteln zu reduzieren, werden damit begünstigt. Das eingebrachte Gas kann dabei so fein verteilt sein, daß es im Endprodukt, also z. B. im Schokoladenüberzug, mit dem menschlichen Auge nicht mehr sichtbar ist. Diese sehr feinen Gasblasen sind hierbei kleiner als die Stärke des Überzuges des Riegels, der Praline o. dgl., so daß in jedem Fall ein geschlossener Überzug gewährleistet ist. Das erfindungsgemäße Verfahren ermöglicht es, einen Gasanteil von bis zu maximal 30 % in die Masse einzuarbeiten. Die belüftete Masse kann als Überzugsmasse, also zusätzlich zu anderen Warenteilen, eingesetzt werden. Es ist aber auch möglich, die belüftete Masse zur Herstellung von Waren aus dieser Masse einzusetzen, beispielsweise bei der Herstellung von Schokoladetafeln oder Riegeln. Bei diesen Anwendungsfällen kann vorzugsweise auch eine größere Blasenstruktur gewählt werden, die beim Verzehr auch sichtbar und spürbar ist. In der Regel wird dabei Stickstoff in die Masse eingearbeitet, weil hierdurch im Gegensatz zu Luft eine Oxidation der fetthaltigen Masse vermieden wird. Schließlich lassen sich solche belüfteten Massen auch als Füllungen bei der Herstellung von Waren, beispielsweise Pralinen, Riegeln, Tafeln o. dgl. einsetzen, so auch bei Doppelkeksen, bei denen eine Füllung aus einer Fett- oder Schokoladencreme Anwendung findet. Das neue Verfahren ermöglicht es, die Einbringung der Wärme durch den Aufschlagprozeß in der Temperiermaschine und die Temperierung über den nachfolgenden Temperierkreislauf so aufeinander abzustimmen, daß die belüftete Masse die gewünschte Verarbeitungstemperatur bekommt. Damit können die Verarbeitungseigenschaften optimiert werden. Gleichzeitig ist damit sichergestellt, daß sich in der aufbereiteten Masse auch die erforderliche Anzahl von stabilen Kristallen befinden, wie dies an sich auch bei unbelüfteten Massen, die mit Hilfe einer Temperiermaschine aufbereitet werden, bekannt ist.

Besonders vorteilhaft ist es, wenn das Gas im Bereich der Kühletagen in die Masse eingebracht wird und die Masse in der Aufschlagstufe, die im Bereich der Temperieretagen angeordnet bzw. zwischengeschaltet ist, aufgeschlagen wird. Die Einbringung des Gases kann insbesondere im Bereich der letzten Kühletage erfolgen. Ob danach als Temperieretage eine Wärmeetage oder eine Kühletage vorgesehen sein muß, richtet sich auch nach der Art der Masse. Die Einleitung des Gases in die Masse erfolgt dabei an einer Stelle an der Temperiermaschine, die sich am Ende der Kühletagen oder der Kühlzone befindet, und damit optimale Kristallisationsbedingungen aufweist. Erst anschließend im Bereich der Temperieretagen bzw. vor diesen erfolgt der Aufschlagvorgang und die feine Verteilung des Gases in der Masse.

Insbesondere ist es sinnvoll, wenn das Gas im Bereich einer Massedurchflußverengung von einer Kühletage in die folgende Etage eingebracht wird. Die Einbringung des Gases erfolgt dabei an einer Verengungsstelle, so daß durch die nachfolgende Ausbreitung der Masse in einer Massekammer bereits die Gewähr dafür gegeben ist, daß hierdurch eine erste Verteilung des Gases in der Masse stattfindet. Das Gas wird insoweit an einer Stelle in die Masse eingebracht, an der die Masse mit einer vergleichsweise größeren Geschwindigkeit strömt.

Die gesonderten Aufschlagelemente der Aufschlagstufe können mit gleicher Drehzahl wie die Rührwerkzeuge angetrieben werden. Es ist aber auch möglich, die gesonderten Aufschlagelemente mit vergleichsweise höherer Drehzahl als die Rührwerkzeuge anzutreiben. Diese Aufschlagelemente unterscheiden sich von den im Stand der Technik bekannten Rührelementen erheblich. Während die Rührelemente nur dazu dienen, die Masse von den Kühlflächen abzulösen und Massenbereiche miteinander zu vermischen, dienen die Aufschlagelemente der Unterteilung der Gasblasen und der feinen Verteilung der Blasen in der gesamten durchströmenden Masse. Die Aufschlagelemente können einen oder mehrere Rotoren und Statoren aufweisen, die mit stiftförmigen Fortsätzen besetzt sind, die zum Zweck der gleichmäßigen Verteilung des Gases miteinander kämmen oder ineinandergreifen.

Die Vorrichtung der eingangs beschriebenen Art kennzeichnet sich erfindungsgemäß dadurch, daß in der Temperiersäule eine gesonderte Aufschlagstufe mit angetriebenen Aufschlagelementen vorgesehen ist, und daß in der Leitung im Bereich der Verteilerdüse ein Rückschlagventil und in der von der Temperiermaschine ausgangsseitig wegführenden Masseleitung zur Erhöhung des Gegendrucks ein Druckhalteventil vorgesehen ist.

Mit Hilfe der in der Temperiermaschine endenden Leitung wird das Gas, welches unter Druck steht, herangeführt und in die Masse eingebracht. Die Leitung endet in einer Verteilerdüse, die vorzugsweise mehrere Düsenöffnungen aufweist, um bereits hier die Unterteilung des Gases in einzelne feinere Blasen vorzubilden. In der Leitung ist ein Rückschlagventil angeordnet, um das Eindringen von Masse in die Leitung zu verhindern, wenn der entsprechende Druck in der Leitung abfällt oder verlorengeht. Das Gas wird somit der Masse zugeführt und in der sich anschließenden Aufschlagstufe mit Hilfe angetriebener Aufschlagelemente weiter feinverteilt, so daß letztendlich die Masse und das Gas in der örtlich begrenzten Aufschlagstufe intensiv aufgeschlagen werden und damit das spezifische Gewicht der Masse verringert wird. Die Gestaltung der Aufschlagstufe kann an die Volumenzunahme angepaßt sein. Die Aufschlagelemente sind grundsätzlich anders ausgebildet als die im Stand der Technik bekannten Rührelemente. Besonder sinnvoll ist es, wenn die Aufschlagelemente eine vergleichsweise größere Umfangsgeschwindigkeit aufweisen und so auf die Masse im Sinne einer Zerschlagung gebildeter Gaskanäle und einer Verwirbelung der Masse einwirken. In der von der Temperiermaschine ausgangsseitig wegführenden Masseleitung ist zur Erhöhung des Gegendrucks ein Druckhalteventil vorgesehen. Damit kann der Gegendruck eingestellt werden. Ein Gegendruck in der Größenordnung von 3 bis 8 bar erbringt bei Schokolademasse hervorragende Ergebnisse.

Sinnvollerweise ist das in einer ausgangsseitig vorgesehenen Masseleitung angeordnete Druckhalteventil einstellbar oder regelbar ausgebildet. Dieses Druckhalteventil hat die Aufgabe, vom Ausgang der Temperiermaschine her einwirkend den Gegendruck in der Masse zu erzeugen bzw. zu erhöhen und aufrechtzuerhalten, der das gezielte Einbringen des Gases, welches ebenfalls unter Druck steht, zu ermöglichen. Das Druckhalteventil ist mindestens einstellbar, vorzugsweise aber regelbar, um eine Anpassung an sich ändernde Massedurchflußmengen bzw. an die Art der Masse und den damit im Zusammenhang stehenden Temperiergrad zu ermöglichen.

Das Druckhalteventil kann als Quetschventil mit einem elastischen Balg ausgebildet sein, der zur Veränderung des Gegendrucks in der Masse pneumatisch beaufschlagbar ist.

Die Aufschlagkammer kann größer ausgebildet sein als die Massekammer in den vorgeschalteten Kühletagen. In der Aufschlagkammer sind die Aufschlagelemente angeordnet und mit höherer Drehzahl als die Rührelemente in den Massekammern angetrieben. Die besondere Ausbildung der Aufschlagelemente wird an einem Beispiel erläutert.

Für den Antrieb der Aufschlagelemente ergeben sich verschiedene Möglichkeiten. So kann der Antrieb der Aufschlagelemente von dem Antrieb der Rührelemente abgenommen sein. Dabei ist es möglich, über die Einfügung einer Getriebestufe die Drehzahl der Aufschlagelemente zu erhöhen. Es ist aber auch möglich, daß für den Antrieb der Aufschlagelemente ein gesonderter Motor mit Antriebswelle vorgesehen ist. Damit ergibt sich die Möglichkeit, die Drehzahl und insbesondere die örtliche Umfangsgeschwindigkeit unabhängig von dem Antrieb der Rührelemente zu wählen und auch das Verhältnis dieser beiden Antriebe zueinander zu verändern, um beispielsweise eine Anpassung an die Art der jeweiligen Masse vornehmen zu können.

Die der Aufschlagstufe nachgeschaltete Temperieretage kann als Kühletage ausgebildet sein bzw. betrieben werden. Die Aufschlagstufe kann die Funktion der bei Temperiermaschinen üblichen Wärmeetage übernehmen, weil durch das Aufschlagen Energie in die Masse eingebracht wird und sich dadurch die Temperatur der Masse erhöht. Je nach der Viskosität der Masse und/oder der Drehzahl der Aufschlagelemente in der Aufschlagstufe kann eine für die Fettkristalle schädlich hohe Temperatur entstehen, die mit der nachgeschalteten Kühletage wieder erniedrigt wird.

Die Erfindung wird anhand bevorzugter Ausführungsbeispiele weiter erläutert und beschrieben. Es zeigen:
- Fig. 1: einen Schnitt durch eine erste Ausführungsform der Vorrichtung mit der Darstellung der wesentlichen Funktionselemente,
- Fig. 2: einen Schnitt durch eine zweite Ausführungsform der Vorrichtung,
- Fig. 3: eine Darstellung einer Düse zum Einbringen des Gases,
- Fig. 4: eine Draufsicht auf den Rotor der Ausfschlagstufe,
- Fig. 5: eine Draufsicht auf den zugehörigen Stator der Ausschlagstufe, und
- Fig. 6: einen Vertikalschnitt durch die Aufschlagstufe.

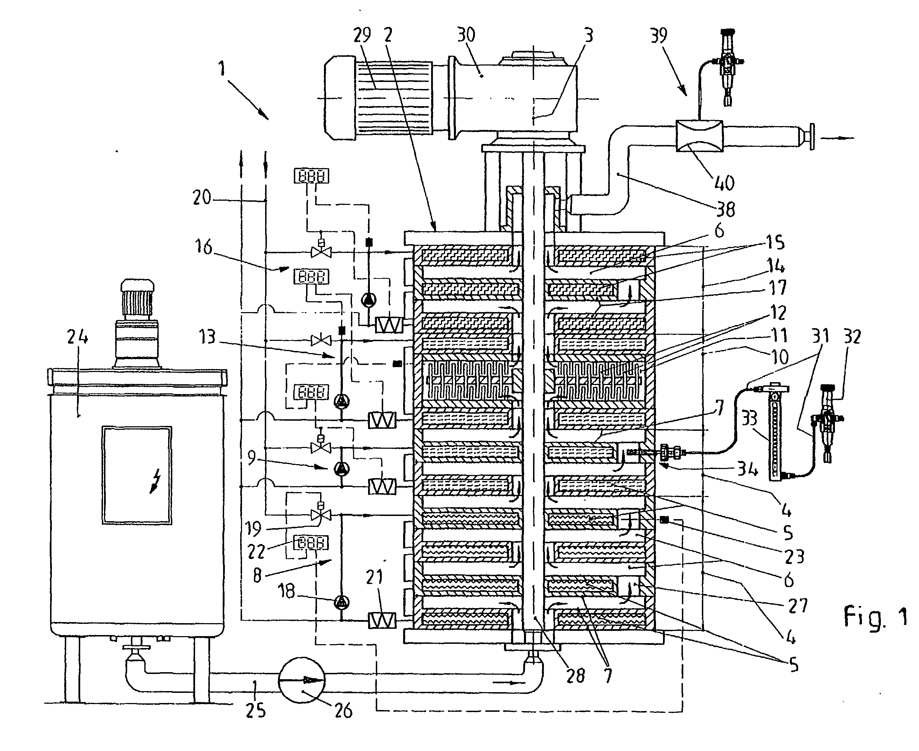

In Fig. 1 ist eine erste Ausführungsform der Vorrichtung dargestellt. Das wesentliche Element baut auf einer Temperiermaschine 1 auf, die eine Temperiersäule 2 mit vertikaler Achse 3 besitzt. Die Temperiersäule 2 ist in Form von Scheiben aufgebaut, wobei die Anzahl der Scheiben in den einzelnen Stufen auch verändert werden kann. Im unteren Bereich der Temperiersäule 2 sind zwei Kühletagen 4 angeordnet, wobei Kühlkammern 5 und dazwischen gebildete Massekammern 6 vorgesehen sind. Die Kühlkammern 5 besitzen den Massekammern 6 zugekehrt Kühlflächen 7. Einige eingangsseitig vorgesehene Kühlkammern 5 sind an einen Kühlkreislauf 8 angeschlossen. Weitere Kühlkammern 5 sind an einen weiteren Kühlkreislauf 9 angeschlossen. Es versteht sich, daß anstelle dieser beiden Kühlkreisläufe 8 und 9 auch ein gemeinsamer Kühlkreislauf vorgesehen sein könnte. Ebenso ist es möglich, die Anzahl der Kühlkreisläufe zu erhöhen. Die wesentliche Kühlung der Masse wird im Bereich des eingangsseitig vorgesehenen Kühlkreislaufes 8 durchgeführt, während nachfolgende Kühlkreisläufe 9 mit anderen Temperaturen betrieben werden können, um z. B. je nach der Art der fetthaltigen Masse beispielsweise eine Kristallisationszone o. dgl. zu bilden. Nachfolgend zu den beiden Kühletagen 4 ist eine Aufschlagstufe 10 vorgesehen, die eine Aufschlagkammer 11 aufweist, in der Aufschlagelemente 12 vorgesehen sind. Die Aufschlagkammer 11 ist vergleichsweise größer ausgebildet als jede der Massekammern 6. Zu der Aufschlagkammer 11 benachbarte Kammern sind an einen Temperierkreislauf 13 angeschlossen. Schließlich ist nachfolgend noch eine Temperieretage 14 vorgesehen, die Temperierkammern 15 aufweist, die an einen Temperierkreislauf 16 angeschlossen sind. Die Temperierkammern 15 weisen den Massekammern 6 zugekehrt Temperierflächen 17 auf. Der Temperierkreislauf 16 kann als Wärmekreislauf, insbesondere aber auch als Kühlkreislauf betrieben werden. In der Aufschlagstufe 10 wird durch die Aufschlagelemente 12 Energie in die Masse eingebracht, die sich in einer Temperaturerhöhung äußert, die für optimale Verarbeitungseigenschaften der Masse nachteilig sein kann. Aus diesem Grunde ist es zweckmäßig, den Temperierkreislauf 16 dann als Kühlkreislauf auszubilden bzw. zu betreiben.

Der Kühlkreislauf 8 weist eine Pumpe 18, ein Magnetventil 19 für eine Kaltwasserleitung 20, einen Wassertank 21 mit Heizelement und einen Temperaturregler 22 auf, der von einem Temperaturfühler 23 gesteuert wird. Der Kühlkreislauf 8 wird wie ersichtlich im Gegenstrom betrieben.

Die anderen Kreisläufe 9, 13, 16 sind entsprechend aufgebaut, wobei die Temperaturfühler zur Steuerung der Temperaturregler an den aus der Zeichnung ersichtlichen Stellen angeordnet sind.

Es ist ein Vorratstank 24 für aufzubereitende pumpfähige Masse vorgesehen, der in bekannter Weise mit einer Heizeinrichtung und einem Rühraggregat versehen ist. Von dem Vorratstank 24 führt eine Leitung 25, in der eine Pumpe 26 angeordnet ist, an den unten befindlichen Eingang der Temperiermaschine 1 bzw. der Temperiersäule 2. Die Masse tritt durch eine z. B. innen im Bereich der Achse 3 liegende Öffnung in die erste Massekammer 6 ein. Zwischen der ersten Massekammer 6 und der zweiten Massekammer 6 befindet sich eine Massedurchflußverengung 27, die auf vergleichsweise größerem Radius, etwa im äußeren Bereich der Scheiben, angeordnet ist. Wie ersichtlich wechseln solche Massedurchflußverengungen 27 von Scheibe zu Scheibe innen bzw. außen liegend ab. In den Massekammern 6 sind nicht dargestellte Rührelemente vorgesehen, die drehfest mit einer durchgehenden Welle 28 verbunden sind, die sich über die gesamte Höhe der Temperiersäule 2 erstreckt und über einen Motor 29 mit nachgeschaltetem Getriebe 30 angetrieben wird. Die Rührelemente dienen dazu, die Masse in den Massekammern zu durchmischen und von den Kühlflächen 7 bzw. Temperierflächen 17 immer wieder abzunehmen. Auch die in der Aufschlagstufe 10 angeordneten Aufschlagelemente 12 werden hier über die Welle 28 angetrieben. Wenn die Aufschlagelemente 12 eine höhere Geschwindigkeit als die Rührelemente aufweisen sollen, ist zusätzlich noch eine Getriebestufe zwischen der Welle 28 und den Aufschlagelementen 12 vorgesehen.

Für die Einbringung des Gases in die Masse ist eine Leitung 31 vorgesehen, die von einem nicht dargestellten Gasvorrat über ein Druckminderventil 32 mit Manometer über einen Durchflußmesser 33 bis in eine Verteilerdüse 34 führt, die im Bereich einer außen liegenden Massedurchflußverengung 27 gegen Ende der Kühletagen 4 angeordnet ist. Diese Verteilerdüse 34 weist an ihrem vorderen Endbereich ein Rückschlagventil 35 auf. In konstruktiver Ausbildung des Rückschlagventils sind mehrere düsenartige Öffnungen 36 vorgesehen, die axial und über den Umfang der Verteilerdüse 34 angeordnet sind. Diese Öffnungen werden von einem elastischen Ring 37 abgedeckt, so daß auf diese Art und Weise das Rückschlagventil 35 gebildet wird, welches dann Schließfunktion einnimmt, wenn der erforderliche Druck in der Leitung 31 zusammenbricht. Über die Verteilerdüse 34 wird das Gas in der vorgesehenen Menge in die Masse eingebracht, wobei es sich in der auf die Verteilerdüse 34 nachfolgenden Massekammer 6 bereits verteilt und insoweit in verteilter Form in die Aufschlagkammer 11 der Aufschlagstufe 10 übertritt. Die Masse und das Gas gelangen hier unter Einwirkung der Aufschlagelemente 12. Sie werden aufgeschlagen, und das Gas wird in der Masse fein verteilt. In der nachfolgenden Temperieretage 14 wird die Masse vorzugsweise gekühlt, bevor sie über eine Masseleitung 38 aus der Temperiermaschine 1 austritt und beispielsweise einer Verarbeitungsmaschine, beispielsweise einer Überziehmaschine oder einer Gießmaschine, zugeführt wird. In der Masseleitung 38 ist ein Druckhalteventil 39 vorgesehen, welches beispielsweise als Quetschventil mit einem elastischen Balg 40 ausgebildet ist, der zur Veränderung des Gegendruckes für die Masse in der Aufschlagkammer 11 pneumatisch beaufschlagbar ist.

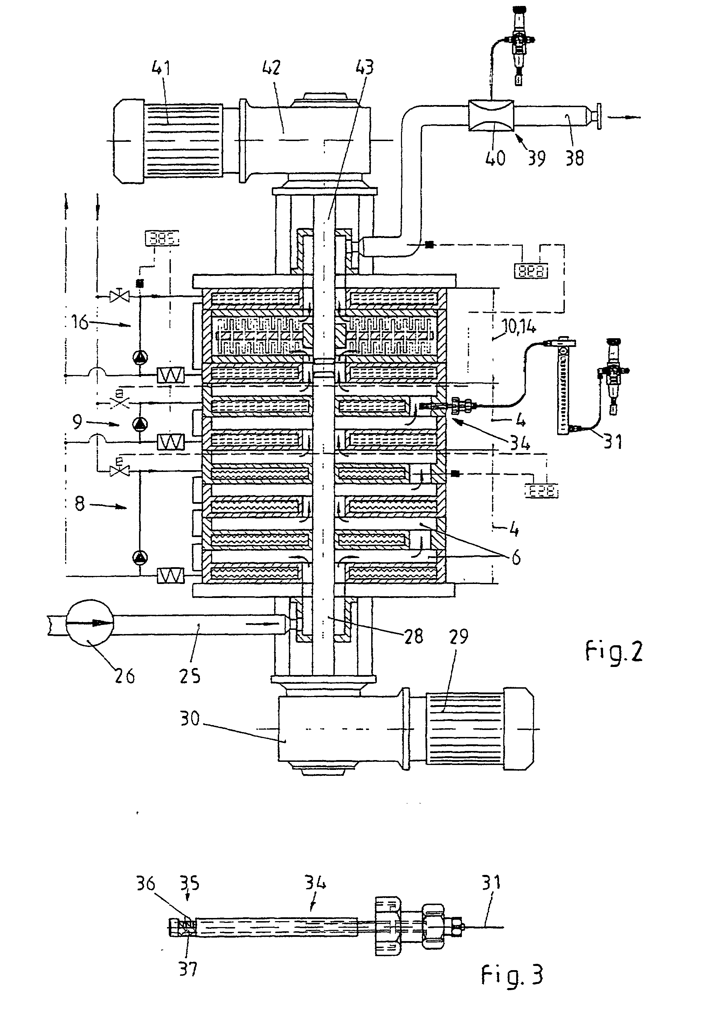

Fig. 2 zeigt eine Ausführungsform der Vorrichtung, die in vielen Teilen der Ausführungsform gemäß Fig. 1 entspricht. Die Rührelemente werden von dem Motor 29 über das Getriebe 30 und letztlich über die Welle 28 angetrieben. Für den Antrieb der Aufschlagelemente 12 ist ein gesonderter Motor 41 mit nachgeschaltetem Getriebe 42 und einer separaten Antriebswelle 43 vorgesehen, auf der die Aufschlagelemente 12 bzw. ein Teil dieser Aufschlagelemente 12 angeordnet sind. Damit ist auf einfache Art und weise und ohne Zwischenschaltung eines Verteilergetriebes die Möglichkeit gegeben, die bewegten Aufschlagelemente 12 mit einer z. B. wesentlich höheren Drehzahl anzutreiben als die Rührelemente in den Massekammern 6. Der Temperierkreislauf 16 umfaßt hier auch die Aufschlagstufe 10 bzw. die Aufschlagstufe 10 und die Temperieretage 14 sind hier zusammengefaßt. Diese Ausführungsform eignet sich für fetthaltige Massen, die nicht besonders temperaturempfindlich sind, so daß eine größere nachgeschaltete Temperieretage 14 (vgl. Fig. 1) in Fortfall kommen kann.

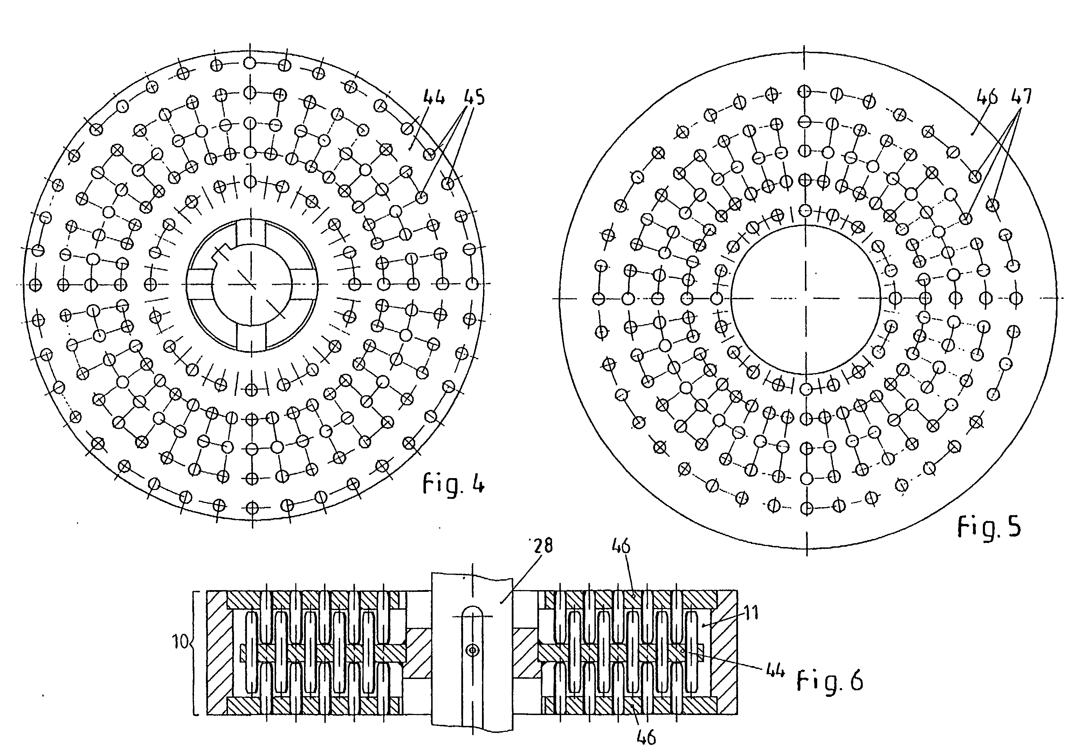

Aus den Fig. 4 bis 6 geht eine beispielhafte Ausführungsform für die Elemente der Aufschlagstufe 10 hervor. Fig. 4 zeigt die Draufsicht auf einen Rotor 44, also eine Scheibe, die eine drehfeste Verbindung mit der Welle 28 bzw. der Antriebswelle 43 ermöglicht. Der scheibenartige Rotor 44 ist auf beiden Seiten mit stiftartigen Fortsätzen 45 versehen. Fig. 5 zeigt eine Draufsicht auf den zugehörigen Stator 46, der ebenfalls scheibenartige Form besitzt, jedoch keine Drehverbindungselemente zu der Welle 28 aufweist. Der Stator 46 ist auf einer Seite mit stiftartigen Fortsätzen 47 versehen, die jedoch auf anderen Radien angeordnet sind, wie dies insbesondere aus Fig. 6 erkennbar wird. Es ist aus Fig. 6 auch ersichtlich, daß zwei Statoren 46 in Verbindung mit einem Rotor 44 Anwendung finden. Die Fortsätze 45 und 47 bilden die Aufschlagelemente 12.

### BEZUGSZEICHENLISTE

- 1 -: Temperiermaschine
- 2 -: Temperiersäule
- 3 -: Achse
- 4 -: Kühletage
- 5 -: Kühlkammer
- 6 -: Massekammer
- 7 -: Kühlfläche
- 8 -: Kühlkreislauf
- 9 -: Kühlkreislauf
- 10 -: Aufschlagstufe
- 11 -: Aufschlagkammer
- 12 -: Aufschlagelemente
- 13 -: Temperierkreislauf
- 14 -: Temperieretage
- 15 -: Temperierkammer
- 16 -: Temperierkreislauf
- 17 -: Temperierfläche
- 18 -: Pumpe
- 19 -: Magnetventil
- 20 -: Kaltwasserleitung

- 21 -: Wassertank
- 22 -: Temperaturregler
- 23 -: Temperaturfühler
- 24 -: Vorratstank
- 25 -: Leitung
- 26 -: Pumpe
- 27 -: Massedurchflußverengung
- 28 -: Welle
- 29 -: Motor
- 30 -: Getriebe
- 31 -: Leitung
- 32 -: Druckminderventil
- 33 -: Durchflußmesser
- 34 -: Verteilerdüse
- 35 -: Rückschlagventil
- 36 -: Öffnungen
- 37 -: Ring
- 38 -: Masseleitung
- 39 -: Druckhalteventil
- 40 -: Balg

- 41 -: Motor
- 42 -: Getriebe
- 43 -: Antriebswelle
- 44 -: Rotor
- 45 -: Fortsatz
- 46 -: Stator
- 47 -: Fortsatz

## Patentansprüche

1. Verfahren zum kontinuierlichen Aufbereiten von zu verarbeitenden fetthaltigen Massen in einer Temperiermaschine (1) mit mehreren Kühletagen (4) mit Kühlflächen (7) und nachgeschalteten Temperieretagen (14) mit Temperierflächen (17), wobei die Masse vermittels einer Pumpe (26) nacheinander durch Massekammern (6) der Kühletagen (4) und der Temperieretagen (14) geführt und dabei in den Massekammern (6) unter Anwendung angetriebener Rührwerkzeuge gerührt wird, während Kühlkammern (5) an den Kühlflächen (7) von einem Kühlmedium und Temperierkammern (15) an den Temperierflächen (17) von einem Temperiermedium durchströmt werden, wobei in die Masse während ihres Durchflusses durch die Massekammern (6) der Temperiermaschine (1) ein Gas eingebracht wird, **dadurch gekennzeichnet,** daß die Masse mit dem Gas in einer in die Temperiermaschine (1) integrierten Aufschlagstufe (10) mit gesonderten Aufschlagelementen (12) unter Einwirkung eines erhöhten Gegendrucks der Masse aufgeschlagen und somit das Gas in der Masse homogen und feinblasig verteilt wird.

2. Verfahren nach Anspruch 1, **dadurch gekennzeichnet**, daß das Gas im Bereich der Kühletagen (4) in die Masse eingebracht wird und daß die Masse im Bereich der Temperieretagen (14) in der Aufschlagstufe (10) aufgeschlagen wird.

3. Verfahren nach Anspruch 1 oder 2, **dadurch gekennzeichnet**, daß das Gas im Bereich einer Massedurchflußverengung (27) von einer Kühletage (4) in die folgende Etage eingebracht wird.

4. Verfahren nach einem der Ansprüche 1 bis 3, **dadurch gekennzeichnet**, daß die gesonderten Aufschlagelemente (12) der Aufschlagstufe (10) mit gleicher Drehzahl wie die Rührwerkzeuge angetrieben werden.

5. Vorrichtung zur Durchführung des Verfahrens nach Anspruch 1 bis 4, mit einer Temperiersäule (2), die mehrere, einen Zylinder bildende, übereinander angeordnete und an einen Kühlkreislauf (8) für ein Kühlmedium angeschlossene Kühlkammern (5) und an einen Temperierkreislauf (16) für ein Kühl- oder Wärmemedium angeschlossene Temperierkammern (15) sowie Massekammern (6) aufweist, wobei in den Massekammern (6) angetriebene Rührwerkzeuge umlaufen und die einzelnen Massekammern (6) über Masse-durchflußverengungen (27) miteinander verbunden sind, und mit einer Pumpe (26) zum Fördern der Masse durch die Massekammern (6), wobei für die Einbringung des Gases eine in der Temperiersäule (2) endende Leitung (31) vorgesehen ist, an deren Ende eine Verteilerdüse (34) angeordnet ist, **dadurch gekennzeichnet**, daß in der Temperiersäule (2) eine gesonderte Aufschlagstufe (10) mit angetriebenen Aufschlagelementen (12) vorgesehen ist, und daß in der Leitung (31) im Bereich der Verteilerdüse (34) ein Rückschlagventil (35) und in der von der Temperiermaschine ausgangsseitig wegführenden Masseleitung (38) zur Erhöhung des Gegendrucks ein Druckhalteventil (39) vorgesehen ist.

6. Vorrichtung nach Anspruch 5, **dadurch gekennzeichnet**, daß das Druckhalteventil (39) einstellbar oder regelbar ausgebildet ist.

7. Vorrichtung nach Anspruch 6, **dadurch gekennzeichnet**, daß das Druckhalteventil (39) als Quetschventil mit einem elastischen Balg (40) ausgebildet ist, der zur Veränderung des Gegendrucks in der Masse pneumatisch beaufschlagbar ist.

8. Vorrichtung nach Anspruch 5, **dadurch gekennzeichnet**, daß die Aufschlagelemente (12) in einer vergleichsweise größeren Aufschlagkammer (11) angeordnet und mit höherer Drehzahl als die Rührelemente in den Massekammern (6) angetrieben sind.

9. Vorrichtung nach Anspruch 5, **dadurch gekennzeichnet**, daß der Antrieb der Aufschlagelemente (12) von dem Antrieb der Rührelemente abgenommen ist.

10. Vorrichtung nach Anspruch 5, **dadurch gekennzeichnet**, daß für den Antrieb der Aufschlagelemente (12) ein gesonderter Motor (41) mit Antriebswelle (43) vorgesehen ist.

11. Vorrichtung nach Anspruch 5, **dadurch gekennzeichnet,** daß die der Aufschlagstufe (10) nachgeschaltete Temperieretage (14) als Kühletage ausgebildet ist.

## Claims

1. A method of continuously treating fat containing masses to be processed in a tempering machine (1) including a plurality of cooling levels (4) having cooling surfaces (7) and tempering levels (14) being arranged downstream and having tempering surfaces (17), the mass being successively guided through mass chambers (6) of the cooling levels (4) and of the tempering levels (14) by a pump (26), the mass being stirred in the mass chambers (6) by the use of driven stirring tools, a cooling medium flowing through cooling chambers (5) at the cooling surfaces (7) and a tempering medium flowing through tempering chambers (15) at the tempering surfaces (17), a gas being introduced into the mass during its flow through the mass chambers (6) of the tempering machine (1), **characterized in** that the mass together with the gas is whipped in a whipping stage (10) being integrated in the tempering machine (1) by separate whipping elements (12) under the influence of an increased counter pressure of the mass such that the gas is homogeneously distributed in the mass and with fine bubbles.

2. The method of claim 1, **characterized in** that the gas is introduced into the mass in the region of the cooling levels (4) and that the mass is whipped in the whipping stage (10) in the region of the tempering levels (14).

3. The method of claim 1 or 2, **characterized in** that the gas is introduced from one cooling level (4) into the following level in the region of a mass flow narrowing (27).

4. The method of one of claims 1 to 3, **characterized in** that the separate whipping elements (12) of the whipping stage (10) are driven at the same number of rotations as the stirring tools.

5. An apparatus for conducting the method of claim 1 to 4, including a tempering column (2) including a plurality of cooling chambers (5) forming a cylinder, being arranged one above the other and being connected to a cooling circuit (8) for a cooling medium and tempering chambers (15) being connected to a tempering circuit (16) for a cooling medium or a heating medium and mass chambers (6), driven stirring tools rotating in the mass chambers (6) and the respective mass chambers (6) being interconnected by mass flow narrowings (27), and a pump (26) for conveying the mass through the mass chambers (6), a conduit (31) ending in the tempering column (2) being provided to introduce the gas, a distributing nozzle (34) being arranged at the end of the conduit (31), **characterized in** that a separate whipping stage (10) including driven whipping elements (12) is provided in the tempering column (2), and that a check valve (35) is provided in the conduit (31) in the region of the distributing nozzle (34) and that a pressure maintaining valve (39) for increasing the counter pressure is provided in the mass conduit (38) leading away from the tempering machine at the side of the exit.

6. The apparatus of claim 5, **characterized in** that the pressure maintaining valve (39) is designed to be adjustable or controllable.

7. The apparatus of claim 6, **characterized in** that the pressure maintaining valve (39) is designed as a squeezing valve including a resilient bellow (40), the bellow (40) being pneumatically subjectable to change the counter pressure in the mass.

8. The apparatus of claim 5, **characterized in** that the whipping elements (12) are arranged in a comparatively greater whipping chamber (11) and they are driven at a greater number of rotations than the stirring elements in the mass chambers (6).

9. The apparatus of claim 5, **characterized in** that the drive of the whipping elements (12) is derived from a drive of the stirring elements.

10. The apparatus of claim 5, **characterized in** that a separate motor (41) including a drive shaft (43) is provided to drive the whipping elements (12).

11. The apparatus of claim 5, **characterized in** that the tempering level (14) being arranged downstream of the whipping stage (10) is designed as a cooling level.

## Revendications

1. Procédé pour la mise en forme continue de masses à traiter contenant des matières grasses dans une machine d'équilibrage de température (1) avec plusieurs étages de refroidissement (4) avec des surfaces de refroidissement (7) et plusieurs étages d'équilibrage de température (14) intercalés à la suite avec des surfaces d'équilibrage de température (17), la masse étant guidée, au moyen d'une pompe (26), successivement à travers des chambres de masse (6) des étages de refroidissement (4) et des étages d'équilibrage de température (14) et étant en même temps agitée dans les chambres de masse (6) en utilisant des outils agitateurs entraînés, tandis que des chambres de refroidissement (5) sur les surfaces de refroidissement (7) sont parcourues par un agent de refroidissement et des chambres d'équilibrage de température (15) sur les surfaces d'équilibrage de température (17) sont parcourues par un agent d'équilibrage de température, un gaz étant amené dans la masse pendant sa traversée des chambres de masse (6) de la machine d'équilibrage de température (1),
caractérisé en ce que la masse est frappée par le gaz dans un étage de frappe (10), intégré dans la machine d'équilibrage de température (1), avec des éléments de frappe (12) séparés sous l'action d'une contre-pression élevée de la masse et qu'ainsi le gaz est réparti dans la masse de manière homogène et en fines bulles.

2. Procédé selon la revendication 1,
caractérisé en ce que le gaz est introduit dans la masse dans la zone des étages de refroidissement (4) et que la masse est frappée dans la zone des étages d'équilibrage de température (14) dans l'étage de frappe (10).

3. Procédé selon la revendication 1 ou 2,
caractérisé en ce que le gaz est introduit, dans la zone d'un rétrécissement de passage de masse (27) d'un étage de refroidissement (4) dans l'étage suivant.

4. Procédé selon l'une des revendications 1 à 3,
caractérisé en ce que les éléments de frappe (12) séparés de l'étage de frappe (10) sont entraînés à la même vitesse de rotation que les outils agitateurs.

5. Dispositif pour la mise en oeuvre du procédé selon l'une des revendications 1 à 4, avec une colonne d'équilibrage de température (2) qui présente plusieurs chambres de refroidissement (5) formant un cylindre, disposées les unes au-dessus des autres et raccordées à un circuit de refroidissement (8) pour un agent de refroidissement et des chambres d'équilibrage de température (15) raccordées à un circuit d'équilibrage de température (16) pour un agent de refroidissement ou de chauffage, ainsi que des chambres de masse (6), des outils agitateurs entraînés tournant dans les chambres de masse (6) et les chambres de masse (6) individuelles étant reliées les unes aux autres par des rétrécissements de passage de masse (27), et avec une pompe (26) pour le transport de la masse à travers les chambres de masse (6), une conduite (31) se terminant dans la colonne d'équilibrage de température (2), à l'extrémité de laquelle est disposée une buse de distribution (34), étant prévue pour l'introduction du gaz,
caractérisé en ce qu'un étage de frappe (10) séparé avec éléments de frappe (12) entraînés est prévu dans la colonne d'équilibrage de température (2) et qu'un clapet antiretour (35) est disposé dans la conduite (31) dans la zone de la buse de distribution (34) et qu'un clapet de maintien de pression (39) est disposé dans la conduite de masse (38) d'évacuation du côté sortie de la machine d'équilibrage de température pour augmenter la contre-pression.

6. Dispositif selon la revendication 5,
caractérisé en ce que le clapet de maintien de pression (39) est ajustable ou réglable.

7. Dispositif selon la revendication 6,
caractérisé en ce que le clapet de maintien de pression (39) est constitué sous forme d'un clapet de pincement avec un soufflet (40) élastique qui, pour modifier de la contre-pression dans la masse, peut être alimenté pneumatiquement.

8. Dispositif selon la revendication 5,
caractérisé en ce que les éléments de frappe (12) sont disposés dans une chambre de frappe (11) comparativement plus grande et sont entraînés à une vitesse de rotation plus élevée que les éléments agitateurs dans les chambres de masse (6).

9. Dispositif selon la revendication 5,
caractérisé en ce que l'entraînement des éléments de frappe (12) est prélevé sur l'entraînement des éléments agitateurs.

10. Dispositif selon la revendication 5,
caractérisé en ce qu'un moteur (41) séparé avec arbre moteur (43) est prévu pour l'entraînement des éléments de frappe (12).

11. Dispositif selon la revendication 5,
caractérisé en ce que l'étage d'équilibrage de température (14) intercalé à la suite de l'étage de frappe (10) est réalisé sous forme d'étage de refroidissement.
